# EUROPEAN PATENT SPECIFICATION

(11) **EP 2 127 276 B1**
(45) Date of publication and mention of the grant of the patent: **16.01.2013**
(21) Application number: 07872069.5
(22) Date of filing: 20.12.2007
(51) Int. Cl.: H04L 12/58

(54) **MESSAGING SYSTEM AND METHOD**
NACHRICHTENÜBERMITTLUNGSSYSTEM UND -VERFAHREN
SYSTÉME ET PROCÉDÉ DE MESSAGERIE

(30) Priority: 13.02.2007 GB 0702763
(43) Date of publication of application: 02.12.2009
(60) Divisional application: 09172895.6
(73) Proprietor: Skype, Dublin 2 (IE)
(72) Inventor: VIIDU, Siim, London SW5 0SU (GB); KUTT, Andres, EE11912 Tallinn (EE)
(74) Representative: Driver, Virginia Rozanne
(86) International application number: PCT/IB2007/004458
(87) International publication number: WO 2008/099233

(56) References cited:
- WO-A-01/49015
- WO-A-01/97089
- WO-A-2005/004444
- US-A1- 2001 026 609
- US-A1- 2002 087 353
- US-A1- 2003 229 673
- US-A1- 2004 120 504
- US-A1- 2004 243 844
- US-A1- 2005 055 409
- US-A1- 2006 053 279
- US-A1- 2007 005 713

## Description

This invention relates to a messaging system and method, particularly but not exclusively for use in a peer-to-peer communication system.

The dominant method for communicating a text-based message to a user at the current time is by email. Email is extremely widely used for the transmission of messages between individuals, and it is also used for sending messages from companies and organisations to individuals. Many of the messages sent from companies to individuals are of high importance or contain sensitive information.

When an email is sent from a sender to a receiver, it is first transmitted from the sender's terminal to a simple mail transfer protocol ("SMTP") server. The SMTP server resolves the domain name of the email address to an internet protocol ("IP") address by contacting a domain name server ("DNS"). The message is then queued for delivery to the IP address, which corresponds to the SMTP server of the recipient. The message is eventually delivered to the SMTP server of the recipient and passed to the recipient's incoming mail server (usually a Post Office Protocol 3 ("POP3") or Internet Message Access Protocol ("IMAP") server) and stored. An email client executed on the recipient's terminal must then contact the incoming mail server to download the message in order for it to be viewed by the recipient.

However, there are a number of significant problems with the use of email, particularly in the case of time-critical or sensitive information being sent from a company to an individual.

The first of these problems is the increasing number of "phishing" attacks. Phishing is the act of attempting to acquire sensitive information (for example credit card or bank details, passwords, etc.) by transmitting seemingly official emails purporting to be from a trustworthy person or business with a real need for such information. This can lure the recipient into replying to these emails and providing the sensitive information to the hoaxer.

Therefore, phishing attempts to spoof emails from trustworthy sources. More complex forms of spoofing are also possible, whereby spoofers access SMTP servers and send emails that appear to be from an address of a reputable source, but in fact are not. Phishing and spoofing can therefore lead to a lack of trust in the emails that are received from companies, as the user is unsure if they are genuine.

Another problem with email is spam. Spam is unsolicited emails that are often sent in bulk to a very large number of email addresses. Currently, a very large proportion of email traffic sent over the Internet is spam, and this is increasing all the time. It is very hard to control the spam that is received at a user's account, and this can lead to considerable dissatisfaction on the part of the user. Spam filters can be used, but these can sometimes result in genuine messages being rejected. There is therefore a problem with email in that it is hard for the users to control what messages are received and from whom.

WO 01/97089 discloses a system that includes a forwarding service operable to receive an email message for delivery to a recipient, store the message at least temporarily in a storage means and check for recipient preferences for delivery of the email message content.

US 2004/0243844 discloses an authorised email control system. The system provides automatic filtering and challenging of unauthorised senders of email to a user.

US 2007/005713 discloses an email system that is backward compatible with existing email systems but uses alternative protocols and allows users to send, track, and retrieve messages.

US 2006/053279 discloses a filter shielding a receiver from undesirable electronic messages. The filter is specified by the receiver. The receiver-specified filter can be downloaded to the sender's computer and executed on the sender's computer. Email is also not an end-to-end secure message delivery system. Email messages are generally not encrypted, and are therefore relatively straightforward to intercept and read. Specific software can be used to encrypt email messages, but this is generally inconvenient to the user. This is a particular problem if the email contains sensitive or personal information.

Furthermore, the time it takes to deliver a message using email can be very variable. This is because the messages often need to be queued for delivery (particularly in busy email systems), and the email client needs to actively fetch the message from the server. Therefore, when an email is sent, there is no guarantee of how long it will take to reach the recipient. This can be a particular problem when a service needs to notify a user of an event that requires a rapid response. The sheer volume of spam sent over email exacerbates this problem further, as the overloading and consequent queuing of messages is mostly caused by the processing of spam messages rather than genuine messages.

According to one aspect of the present invention there is provided a method of transmitting a message from a first entity to a terminal of a user over a communication system, comprising: said first entity transmitting said message to a message transmission means; said message transmission means generating a notification message from said message and storing said message in a storage means; and transmitting said notification message to a client executed on said terminal over said communication system; and a second entity operating the communication system and authorising said first entity to access the message transmission means connected to said communication system; responsive to receiving said notification message, said client communicating with said storage means over the communication system to access information on said message to ascertain the identity of the first entity that transmitted the message, and determining whether the user has selected to receive messages from the first entity wherein said user selection is made prior to receiving the notification message; and in the case that the user has selected to receive messages from the first entity, said client retrieving said message from said storage means over said communication system and displaying said message to said user on a display means of said terminal.

According to another aspect of the present invention there is provided a system for transmitting a message from a first entity to a terminal of a user over a communication system, wherein said first entity comprises means for transmitting said message to a message transmission means; said message transmission means comprises means for generating a notification message from said message, storage means for storing said message, and means for transmitting said notification message to a client executed on said terminal over said communication system, said client comprises means for displaying said message to said user on a display means of said terminal; and
the communication system is operated by a second entity, said second entity comprises means for authorising said first entity to access the message transmission means connected to said communication system; said client comprises means for communicating with said storage means over the communication system to access information on said message to ascertain the identity of the first entity that transmitted the message, means for determining whether the user has selected to receive messages from the first entity wherein said user selection is made prior to receiving the notification message, means for retrieving said message from said storage means over said communication system in the case that the user has selected to receive messages from the first entity.

According to another aspect of the present invention there is provided a user terminal connected to a communication system and arranged to receive a message transmitted from a first entity over the communication system, comprising: a display means; and a client executed on said terminal, comprising means for receiving a notification message transmitted by a message transmission means connected to said communication system, said client comprises means for displaying said message to said user on the display means of said terminal; said client comprises means for communicating over the communication system with a storage means storing said message to access information on said message to ascertain the identity of the first entity that transmitted the message, means for determining whether a user of the user terminal has selected to receive messages from the first entity wherein said user selection is made prior to receiving the notification message, means for retrieving said message from a storage means over said communication system in the case that the user has selected to receive messages from the first entity.

The sender of an email, such as a company or organisation, may have very little knowledge about the recipient of an email that it is sending. For example, the sender may only be able to deduce some information on the country of the user from the domain of the email address (e.g. the email address "user@example.co.uk" may indicate that the user is based in the United Kingdom). However, many email addresses, such as those with ".com" domains, do not provide the sender with any specific information. This can cause a problem if, for example, the recipient needs to receive the information in a specific language or the information should relate to a particular currency.

There is therefore a need for a technique to address the aforementioned problems with email and provide a secure, faster and more controllable way of providing text-based messages to a user from trusted sources.

In embodiments the method may further comprise the steps of: said client displaying a list of entities to the user; and said user selecting, for each entity in the list of entities, whether or not to receive messages from that entity. Said client may comprise: means for displaying a list of entities to the user; and means for selecting, for each entity in the list of entities, whether or not to receive to receive messages from that entity.

The method may further comprise the step of, in the case that the user has selected not to receive messages from the first entity, said client rejecting the message without retrieving the message from the storage means. Said client may comprise means for rejecting the message without retrieving the message from the storage means in the case that the user has selected not to receive messages from the first entity.

The method may further comprise the step of said first entity accessing information relating to said user from said message transmission means prior to the step of transmitting said message. The first entity may comprise means for accessing information relating to said user from said message transmission means.

The information relating to said user may include information on whether the user has selected to receive messages from the first entity, whereby if the user has selected not to receive messages from the first entity, said first entity does not transmit said message to said message transmission means.

The information relating to said user may comprise the language of the user and/or the currency of the user.

The method may further comprise the step of said message transmission means transmitting a reporting message to said first entity responsive to said client retrieving the message. The message transmission means may comprise means for transmitting a reporting message to said first entity responsive to said client retrieving the message.

The method may further comprise the step of said message transmission means transmitting a reporting message to said first entity responsive to said client rejecting the message. The message transmission means may comprise means for transmitting a reporting message to said first entity responsive to said client rejecting the message.

The method may further comprise the step of said first entity defining a time limit for delivery of the message, and wherein said step of communicating with said storage means further comprises said client checking whether the time limit has expired, such that if the time limit has expired said client does not retrieve the message from the storage means. The first entity may comprise means for defining a time limit for delivery of the message, and the client may comprise means for checking whether the time limit for the message stored in the storage means has expired, such that if the time limit has expired the client does not retrieve the message from the storage means.

The method may further comprise the step of said message transmission means transmitting a reporting message to said first entity responsive to the expiry of said time limit. The message transmission means may comprise means for transmitting a reporting message to the first entity responsive to the expiry of said time limit.

The communication system may be a peer-to-peer communication system.

Said message may be one of a reminder message, a message from an auction website, an alert message from a payment service, or an information message from a directory enquiry service.

For a better understanding of the present invention and to show how the same may be put into effect, reference will now be made, by way of example, to the following drawings in which:
Figure 1 shows a system for providing messages to a user over a peer-to-peer network;
Figure 2 shows a flowchart for the operation of the system in Figure 1;
Figure 3 shows user options for the operation of a peer-to-peer client;
Figure 4 shows a pop-up alert window for a message from an auction website;
Figure 5 shows a message from an auction website listed in an event panel of the user interface of a peer-to-peer client;
Figure 6 shows a large message window for a message from an auction website;
Figure 7 shows a small message window for a message from an auction website;
Figure 8 shows a message from an auction website listed in a history tab of the user interface of a peer-to-peer client;
Figure 9 shows a pop-up alert window for a message from an account system;
Figure 10 shows a message from an account system listed in an event panel of the user interface of a peer-to-peer client;
Figure 11 shows a message window for a message from an account system;
Figure 12 shows a message from an account system listed in a history tab of the user interface of a peer-to-peer client;

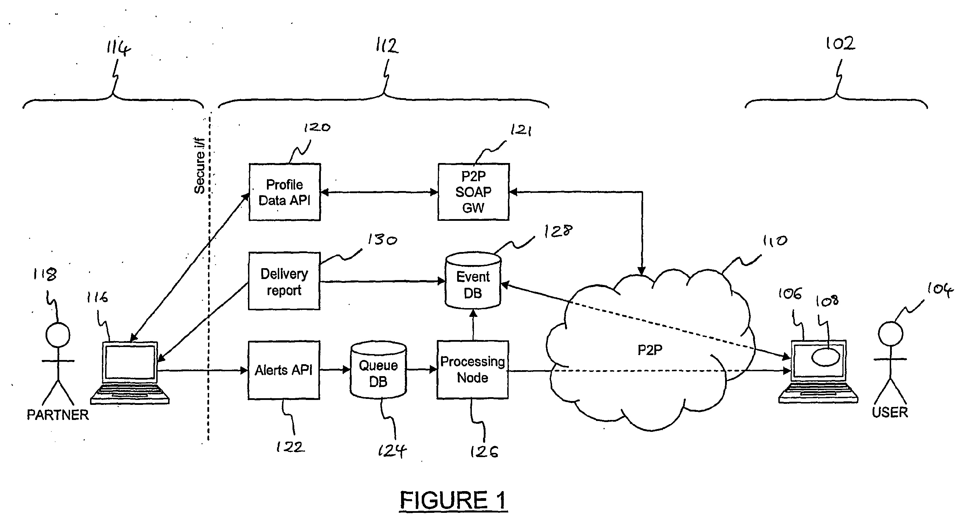

Reference is first made to Figure 1, which illustrates a system for providing messages to a recipient user from a sender. The system operates using a peer-to-peer ("P2P") network topology built on proprietary protocols. In particular, the system shares infrastructure with a P2P communication system. An example of this type of communication system is the Skype™ system. To use a peer-to-peer service, the user must install and execute client software on their user terminal. The client software is provided with a digital certificate from a central server. Once the client software has been provided with the certificate communication can subsequently be set up and routed between users of the P2P without the further use of a central server. In particular, the users can establish their own communication routes through the P2P system based on exchange of one or more digital certificates (or user identity certificates, "UIC") to acquire access to the P2P system. The exchange of the digital certificates between users provides proof of the user's identities and that they are suitably authorised and authenticated in the P2P system. Therefore, the presentation of digital certificates provides "trust" in the identity of the user. The client software provides voice over IP ("VoIP") and instant messaging ("IM") connections. It is therefore a characteristic of peer-to-peer communication that the communication is not routed using the central server but directly from end-user to end-user. Further details on such a P2P system are disclosed in WO 2005/009019.

Figure 1 illustrates three "domains" in the system. The first is the user domain 102 comprising the user 104 and a user terminal 106 operated by the user 104. The user terminal 106 executes client software 108 provided by the operator of the P2P network. The client 108 is used to provide VoIP calls and IM communication, and also for the delivery of messages. The user terminal 106 is connected to the P2P network 110. Note that a large number of users may be present in the system, but only one is shown in Figure 1 for clarity. The second domain is the P2P backend domain 112. The P2P backend domain 112 comprises servers and nodes, operated by the operator of the P2P network, that enable the message delivery system, as described hereinafter. The P2P backend domain 112 may therefore be referred to as the message transmission system. The third domain is the partner domain 114. This domain comprises a terminal 116 operated by the sender of a message destined for the user 104. The sender of the message is known to the operator of the P2P system and trusted, and hence is referred to hereinafter as a partner 118. Note that several partners may be present that can transmit messages to users, but only one is shown in Figure 1 for clarity.

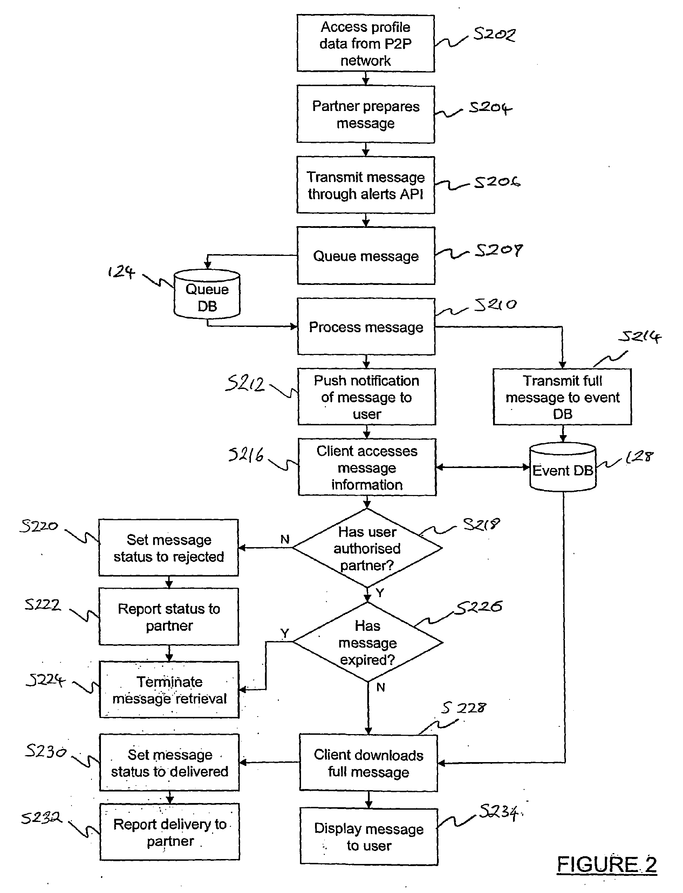

The operation of the system shown in Figure 1 is illustrated with reference to the flowchart of Figure 2. To begin the process of transmitting a message to user 104, the partner 118 uses terminal 116 to access profile data for the user in question. This is achieved by the partner accessing the data via a profile data application programming interface ("API") 120 provided by the P2P network operator. Access to this API is via a secure interface. The secure interface ensures that only authorised partners can gain access to this information. The interface can be secured, for example, by the P2P network operator providing an authentication certificate to the trusted partner, which must be presented to the API when access is required. Access to the API may also only be permitted from terminals with specific IP addresses, which the partner has provided to the P2P network operator in advance.

The profile data can comprise information about the recipient that permits the partner to provide a greater degree of personalisation to the message than would otherwise be possible. For example, the profile data may include the preferred language of the user 104 or the appropriate currency for the country of the user 104. The profile data may also indicate whether or not the user has chosen to receive messages from this particular partner. Furthermore, the profile data may provide information on the version of the client software 108 executed on the user terminal 106, and in particular whether this version is able to receive the message. Profile data may further include information on the current presence state of the user 104, for example whether the use is online, offline, busy or unavailable.

In a preferred embodiment, the profile data API 120 is accessed using the simple object access protocol ("SOAP"), which is a standard for exchanging messages over the World Wide Web. The profile data API 120 obtains the profile data information from a P2P SOAP gateway ("GW") 121, which provides an interface between the profile data API 120 and the P2P network 110, where the data is held distributed among the peers that make up the P2P network. The profile data is "live" in the sense that it corresponds to the state of the user at the time the information is accessed. This provides an important advantage over other messaging systems, as the information about the user is never out of date. In alternative embodiments, a different protocol to SOAP can be used, such as the lightweight directory access protocol ("LDAP").

Referring to Figure 2, the step of obtaining the profile data from the P2P network is shown in S202. Note that, for some applications, the accessing of profile data may not be required. For example, some partners may not require any information about the preferences of the user or his current state in order to prepare the message. This may depend on the content of the message being sent.

If the profile information indicates that the user can receive the message (e.g. the user terminal 106 is executing the correct version of the client software 108 and has not declined to receive messages from this partner 118) then, in step S204, the partner 118 prepares the content of the message. The content can be tailored according to the profile data, for example it can be in a particular language or display a particular currency.

The message is then transmitted from the terminal 116 of the partner 118 to the backend domain 112 of the P2P system in step S206. This is achieved by transmitting the message using an alerts API 122. The alerts API 122 is a SOAP API (like the profile data API 120) and provides an interface for the message to be provided to the backend domain. As with the profile data, the interface is a secure interface protected by, for example, authentication certificates and fixed IP addresses. This prevents messages being sent from sources that are not trusted by the operator of the P2P network.

From the alerts API 124, the message is sent to a queue database ("DB") 124. The queue DB 124 stores the message until it is ready to be processed. In preferred embodiments, the queue DB is a first in, first out ("FIFO") queue, wherein the messages from multiple partners are outputted from the queue in the order in which they arrive. In alternative embodiments, priorities may be allocated to the messages, such that those with higher priorities are outputted from the queue first. The queuing of messages is shown in step S208.

In step S210, the message from the queue DB 124 is processed. The processing is performed by a processing node 126. The processing node 126 performs several functions with the message. The processing node 126 generates a notification message, and this is transmitted (i.e. "pushed") to the client 108 executed on the user terminal 106 over the P2P network 110, as shown in step S212. In parallel with this, the message is also transmitted from the processing node 126 to an event DB 128 (where it is stored until it is to be delivered to the user 104) as shown in step S214.

The notification message pushed to the client 108 notifies the client that a message is waiting to be delivered. If the user 104 is not online, then the notification message cannot be provided to the client 108. In this instance, the notification message is stored, and delivered to the client 108 when the user 104 reconnects to the P2P network 110 and comes online. The notification message is stored in a P2P database (not shown in Figure 1) which is located within the P2P network 110, such that the data stored in the database is distributed amongst the peers that make up the P2P network 110. However, a time limit may be set for the message by the partner, such that if the notification message is not delivered to the client 108 within a fixed time period, the message stored in the event DB 128 is not delivered to the user. This is achieved by the client 108 performing a check before downloading the message from the event DB 128 (described in more detail below) in case the user has been delivered the notification message from the P2P database, but the time limit has already expired by the time the process to fetch the message is started. The use of a time limit allows time-critical messages to be sent, which need to be reacted to within a particular time-frame to be relevant, such that the user will not be exposed to out-of-date messages that have already passed the relevant time-frame.

In addition to the notification message being pushed to the client 108, the client may also actively check with the processing node 126 whether there are any notification messages. In particular, this may occur immediately after the client 108 is executed on the terminal 106, or when the user 104 logs in to the P2P network 110.

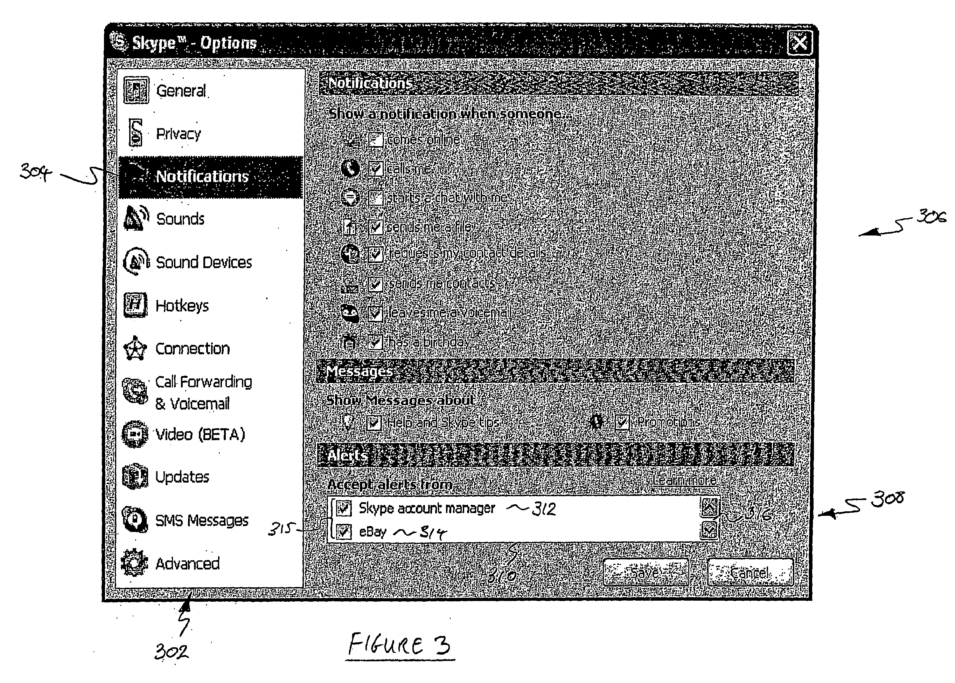

Upon receiving a notification message, the client 108 knows that there is a message waiting to be delivered for the user. The client 108 then connects to the event DB 128 (where the message was stored in step S214) over the P2P network 110, and accesses some information on the waiting message (S216). In particular, in step S218, the client 108 checks the identity of the partner that has sent the message and compares this to a list of partners that the user has indicated that he is willing to accept messages from (discussed in more detail with reference to Figure 3, below). If the partner is not in this list, then the message is rejected. This is recorded as a "rejected" status in the event DB (in step S220), which is reported to the partner in step S222 (described in more detail below). The message is not downloaded to the user terminal, and the message delivery process ceases in step S224. If the user is accepting messages from this partner, then the client also checks (in step S226) whether the message in the event DB 128 has a time limit set which has expired. If a time limit has expired the message is not downloaded and the process terminates. However, if the above checks both indicate to the client 108 that the message is from an approved partner and has not expired (or there is no time limit), then in step S228 the client 108 downloads the message to the user terminal 106. The event DB 128 logs the updated information on the status of the message. In particular, in step S230, the status is updated to "delivered" when the message is fetched, and it can store information such as the time that it was fetched by the client 108. The updated status is reported to the partner in step S232 as described in more detail below.

Once the message has been downloaded to the user terminal 106, the message can be displayed to the user 104 using the client 108 (shown in step S234). This is described in more detail hereinafter.

As mentioned above, the status of the message also in the event DB 128 is reported to the partner 118 (e.g. in step S 222 and S232). The status of the message is reported to the partner 118 by a delivery report node 130 (shown in Figure 1). The delivery report node periodically queries the event DB 128 in order to determine the status of a message. Upon detecting a change in the status of the message the delivery report node 130 transmits a reporting message to terminal 116 to notify the partner of the updated status. For example, the reporting message can notify the partner that a particular message has been delivered to the client 108 at a particular time. In alternative embodiments, the delivery report node 130 can provide a status report to the partner 118 every time it checks the status at the event DB 128, instead of only reporting when there is a change in status.

Several possible status states exist for a message, and these are maintained and stored at the event DB 128. In preferred embodiments, a delivery report sent to the partner 118 will give a status for a message of either "delivered", "expired", "error" or "rejected". A "delivered" status indicates that the message has been fetched by the client 108 and delivered. This may also be stored with a timestamp of the delivery time. An "expired" status indicates that a message had a time-limit associated with it, and the message was not delivered within this time. This status therefore indicates to the partner 118 that the message was not delivered to the user 104 due to the expiry of the time-limit. An "error" status indicates that the message was not delivered due to an error or failure in the system. A "rejected" status indicates to the partner 118 that the user did not download the message because the user's preferences were set such that he had chosen not to receive messages from this partner (discussed in more detail with reference to Figure 3, below).

The above-described system has several advantageous features. The message sent to the user 104 is delivered very quickly to the user, if the user is online when the message is sent. This is due to the controllable nature of the messaging system, whereby only specific partners can send messages. This permits control over the load of the system, and allows the nodes such as the queue DB 124 and processing node 126 to be managed such that they are not overloaded, which reduces transmission delay. In particular, the controllable nature of the messaging system ensures that spam is not being sent, thereby eliminating this source of message congestion. Furthermore, the part of the system that uses the P2P network 110 scales reliably, regardless of the number of users in the system, which means that the delivery of messages over the P2P network 110 does not become a bottleneck in the system. Specifically, the absence of central servers required to send the messages across the P2P network 110 means that the messages sent from the backend domain 112 to the user domain 102 over the P2P network 110 can be rapidly delivered even if a large number of users are present.

The above-described system is also end-to-end secure. The messages sent between the partner and the alerts API 122 and profile data API 120 are encrypted with public/private key encryption. Every message transmitted over the P2P network 110 is also fully encrypted. The messages also cannot be spoofed, as only trusted partners have access to the secure interface to the profile data API 120 and alerts API 122. The users can therefore trust the messages they receive, as they cannot be phishing attacks.

The messaging system also provides reliable delivery information back to the partner. Delivery information in a known email system is unreliable, as delivery notifications are often either not sent back to the sender by the email client (as they can be overridden by the user), or an email server may indicate that a message has been received even though the email client of the end user has not received the message, thereby giving a false indication of delivery. The message delivery system of Figure 1 does not have this problem, as the delivery notification cannot be overridden by the user, as it is determined though querying the event DB 128, and the status is not updated until the client 108 actually fetches the message.

Reference is now made to Figure 3, which shows a screenshot of user options for the operation of the client 108. Region 302 shows several categories of user options, of which the category "notifications" 304 has been selected. Region 306 shows several notification options that are unrelated to the messaging system in question and are not considered further here. Region 308 of the screenshot of Figure 3 shows the options related to the message delivery. In particular, list box 310 shows a list of partners that have been authorised by the operator of the P2P network to send messages to users. For example, two example partners of "Skype account manager" 312 and "eBay" 314 are shown illustrated in Figure 3. The user 104 of the client 108 can use check boxes 315 next to the names of the partners to select or deselect the receipt of messages from the listed partners. More than two partners may be listed in box 310, and these can be viewed using the scrollbar 316.

The options in region 308 of Figure 3 are important as they provide control to the end user 104 of the messages that are received. Therefore, the user 104 can readily prevent messages from being received from certain partners, whilst allowing messages to be received from others. This is in contrast to the case of email, where the user has little control over who messages are received from. If a user has deselected a partner from the list 310, then this is reflected in the user's profile data, and is therefore communicated to the partner (in step S202 of Figure 2). This indicates to the partner that a message should not be sent to this user. Even if a message is sent to this user from this partner (for example by the partner ignoring or not accessing the profile data, or the user changing his preferences to deselect a partner in the intervening period between a message being sent by the partner and the notification being received at the user terminal), the client 108 would detect (in step S218) that the user did not wish to receive messages from this partner, and would reject the message before the message is downloaded to the user terminal. The status associated with the message in the event DB 128 is then set to "rejected", as mentioned above. This ensures that the user 104 never receives messages from a partner he has deselected in list 310.

In further embodiments, an additional check of the list of partners 310 is also made by the client 108 after the message has been downloaded to the user terminal, but before the message is actually shown to the user 104 on a display of the user terminal 106. This extra check is useful in the case that a user has selected to receive messages from a particular partner that has sent a message, and the client has already performed the check in step S218, but the user then subsequently deselects the partner from the list 310 in the intervening period between the check in step S218 and the message being displayed to the user. If the client did not perform the extra check, then the user would be displayed the message, even though he had deselected the partner. The extra check after the message has been downloaded ensures that this cannot occur.

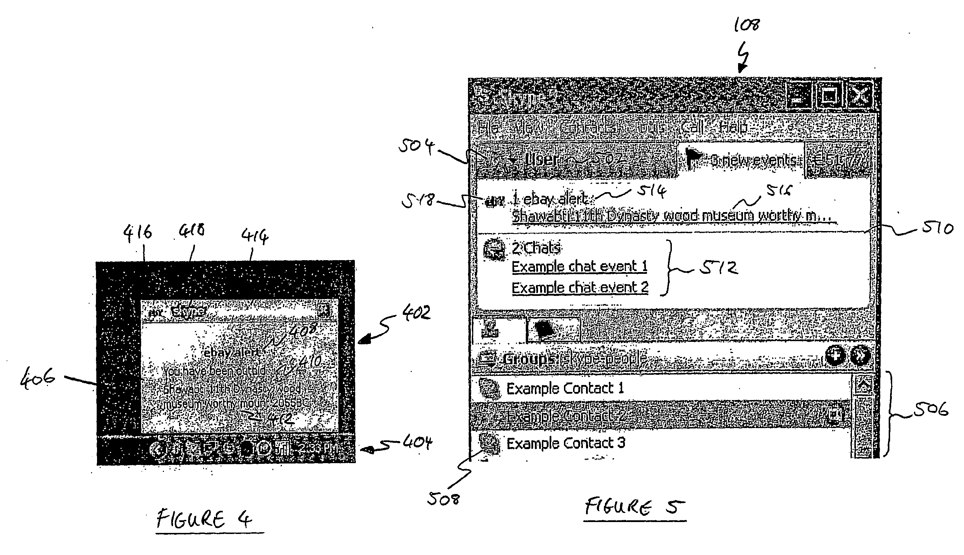

Reference is now made to Figures 4 to 12, which illustrate the user interfaces of the client 108 that are shown to the user 104 when a message is delivered. Figures 4 to 8 show an exemplary application of the messaging system wherein the partner is the operator of an auction website in which the user 104 is bidding for an item. Specifically, the auction website partner transmits a message to the user when the user has been outbid on an item. This type of application leverages the advantageous features of the messaging system, particularly the rapid delivery of the message, as the message needs to be reacted to within a certain period of time due to the real-time nature of the auction. Furthermore, the secure nature of the system ensures that third parties cannot intercept the messages and determine what the user is purchasing. The user 104 has trust in the messages received, as he is aware that they cannot be spoofed, and only trusted partners of the P2P network operator are allowed to transmit messages.

Figure 4 shows the user interface presented to the user 104 on the terminal 106 when a message is downloaded by the client 108 (step S228 in Figure 2). The user interface in Figure 4 is a pop-up alert 402 that appears from the system tray 404 of the operating system of terminal 106 (this is also known as a "toast" window). The pop-up alert 402 comprises a main window 406 in which is shown a caption 408 for the message and also some more detailed information on the message, such as a title 410 and subject 412. The pop-up alert also has a header bar 414 comprising a logo for the partner 416 and the P2P network operator 418, which allows the user to rapidly identify the source of the message.

If the user 104 has used the client 108 to log in to the P2P network 110, but has set his presence state (in the client 108) to "busy" or "do not disturb" (as opposed to "online" or "available"), then the pop-alert is not displayed to the user when a message is fetched. Instead, the message is simply shown as an event in the client window, as will be described below with reference to Figure 5.

Figure 5 shows a portion of the user interface of the client 108, after a message has been fetched. The P2P network username 502 of the user 104 is shown in the client, and the current presence state of the user 104 is indicated by icon 504. The client 108 displays a list of contacts 506 that the user has stored in the client, and VoIP or IM communication can be established with these contacts by selecting them. The presence state for each of the contacts is shown as an icon next to their name, for example as shown in icon 508.

When certain communication events occur, the client displays an event panel 510 to alert the user to these events. Example communication events include missed calls, voicemail messages and missed IM chats. An example of two IM chat events is shown at 512. The event panel is also used to indicate to the user that there is a message from a partner waiting to be read. The entry in the event panel for the message displays similar information to the pop-up alert in Figure 4, i.e. a caption 514, a subject 516 and a partner icon 518. The message is shown in the event panel following the display of the pop-up alert (as shown in Figure 4) if the user is online, or, if the user has his presence set to "do not disturb", the message is shown in the event panel immediately, without displaying a pop-up alert.

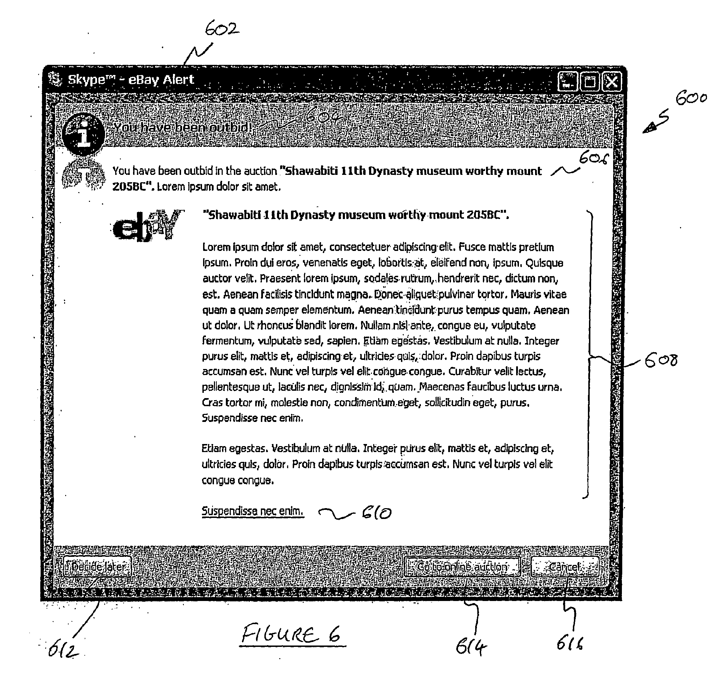

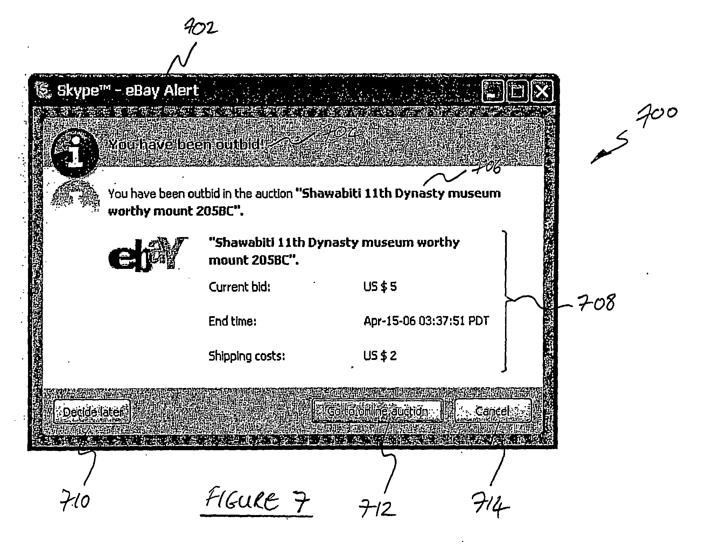

The subject 516 of the message shown in the events panel 510 is a hyperlink that can be clicked by the user, and when this is done the full message is displayed to the user, as illustrated in Figures 6 and 7. Figure 6 illustrates a first embodiment of the full message window, and Figure 7 illustrates an alternative embodiment of the full message window.

Referring first to Figure 6, this shows a large version of the full message window 600 that is displayed to the user 104 when he clicks on the link in the event panel. The large message window 600 comprises a caption 602, a title 604, a subject 606, a text portion 608 containing the main body of the message, and a footer 610. The contents of all of these sections are determined by the partner 118 when preparing the message, and various aspects of the content (e.g. the language used) is determined by the profile data obtained as the first step in the message sending process.

The message window 600 shown in Figure 6 also comprises three buttons. The first button is a "decide later" button 612. If this button is activated by the user, then the message window is closed, but the message notification remains in the events panel shown in Figure 5. Therefore, this button allows the user to close the message window without taking any action in response to it, and it will still be clearly visible to the user in the events panel for when the user does decide to act upon the message. The inclusion of this button in the message is optional, and whether or not the partner chooses to include it depends on the content and type of the message.

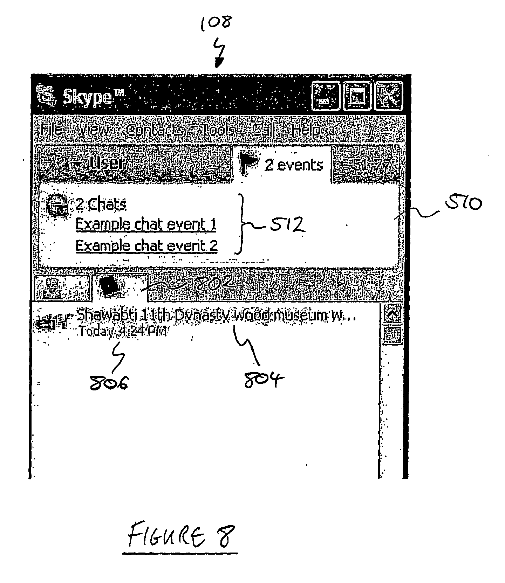

The second button is an "action" button 614. In the example shown in Figure 6, the action button 614 is labelled "go to online auction". In this example, when the user activates the button a web-browser program is executed, which displays to the user the relevant webpage of the auction website to which the message relates. This is achieved by associating the action button 614 with a hyperlink comprising the webpage address (e.g. a uniform resource identifier, "URI") in the message. This allows the user to take action in response to the message, for example placing a higher bid in the auction in response to being outbid. After the action button 614 is activated, the message window 600 is closed, and the message notification in the events panel in Figure 5 is removed. The message is not deleted however, but is stored and remains accessible from the client, as discussed with reference to Figure 8. The function (and label) of the action button 614 is determined by the partner creating the message, and the action taken is related to the content of the message. Apart from being taken to a webpage, other actions are also possible, such as initiating a call over the VoIP network or making a call to a public switched telephone network ("PSTN") number. These alternative actions are considered hereinafter in more detail with reference to other applications of the messaging system.

The third button is a "cancel" button 616. If this button is activated by the user, the message window 600 is closed without any further actions being taken, and the message notification in the events panel in Figure 5 is removed. The message is not deleted however, but is stored and remains accessible from the client, as discussed with reference to Figure 8.

Figure 7 illustrates an alternative, more compact form of the full message window 700, which can be used by partner instead of the message window in Figure 6 if there is a smaller amount of information to be sent in the message. The small message window 700 comprises a caption 702, title 704, subject 706 and text 708, in common with the larger message window shown in Figure 6. The small message window 700 also comprises the same three buttons (710, 712, 714) as in the larger message window shown in Figure 6.

Reference is now made to Figure 8, which illustrates a portion of the user interface of the client 108, after either the action button (614 or 712) or cancel button (616 or 714) has been activated. The event panel 510 is still present, and this still shows the two example chat events 512. However, the message notification is now longer shown in the events panel 510, as the user has viewed and acted on (or cancelled) the message. The message can still be viewed however by the user accessing a "history" tab 802 in the client 108. The history tab 802 displays previous events such as past calls and IM conversations that were made using the client. The message from the auction website partner can seen listed in the history tab 802 with a subject 804 and a timestamp of its delivery 806. This allows the user to access and re-read the message even after it has been acted on or cancelled.

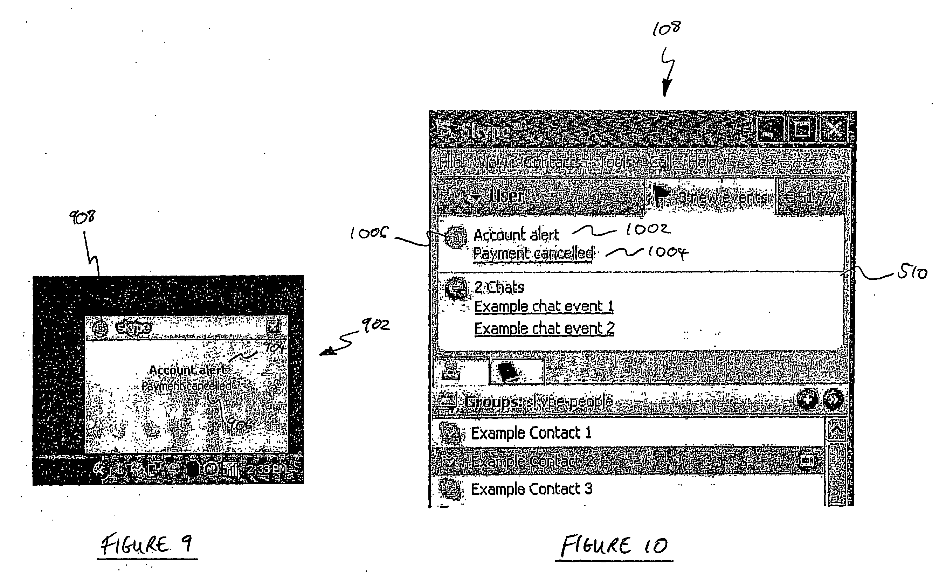

Figures 9 to 12 show a second exemplary application of the messaging system, wherein the messages relate to the management of the user's account in the P2P communication system. The partner in this example is therefore the same as the P2P network operator. Specifically, in this example, the user has completed a payment into his account, but due to a problem (e.g. the payment was rejected by the credit card provider) the payment has been cancelled, and a message is sent to notify the user. The messaging system is advantageous in this application because it is secure and not spoofable, and the message relates to sensitive information (i.e. payments). Therefore, the user can trust the messages as being genuine. Furthermore, the rapid delivery of the message allows the user to quickly rectify the problem without significant delay.

Figure 9 shows a pop-up alert 902 similar to that shown in Figure 4, except in this instance the caption 904 and title 906 relate to payments, and the icon 908 indicates that the partner is the payment system of the P2P network operator. The operation is otherwise identical to that described above with reference to Figure 4.

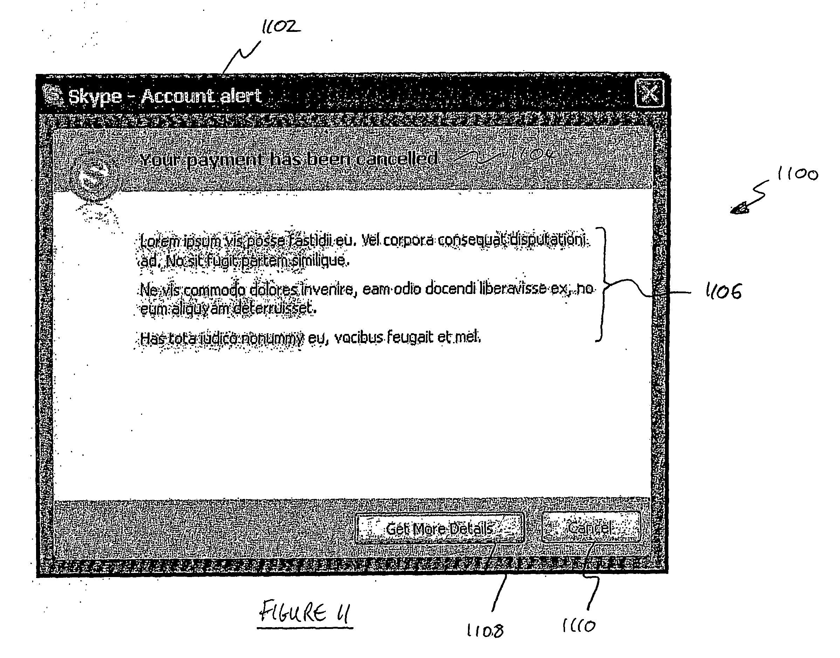

Figure 10 shows a portion of the client 108 user interface, similar to that shown in Figure 5. As with Figure 5, the message notification is shown in the event panel 510, with a caption 1002, hyperlinked title 1004 and icon 1006. When the user clicks on the title 1004, he is displayed the message window 1100 shown in Figure 11. As with the message window 600 shown in Figure 6, this comprises a caption 1102, title 1104 and message text 1106. In this example the partner has chosen not to include other optional items such as a subject line and footer. The message window 1100 also comprises an action button 1108 labelled "get more details", and when this is activated by the user he is displayed a webpage that outlines the reasons for the payment refusal and suggestions for how to correct this or make alternate purchases. The webpage may be displayed in a web-browser executed on the user terminal in response to the activation of the action button 1108, or alternatively in a window of the client 108. In alternative embodiments, activation of the action button 1108 can cause the client to make a voice call to an operator. This is achieved by associating the action button with a hyperlink that is recognised by the client (e.g. a URI of the type "callto://.."), and causes the client to initiate voice communication with a calling identifier (such as a P2P network identity or a PSTN number) embedded in the hyperlink. A cancel button 1110 is also present, which operates in the same way as described above with reference to Figure 6. Note that in this example the partner has chosen not to include a "decide later" button.

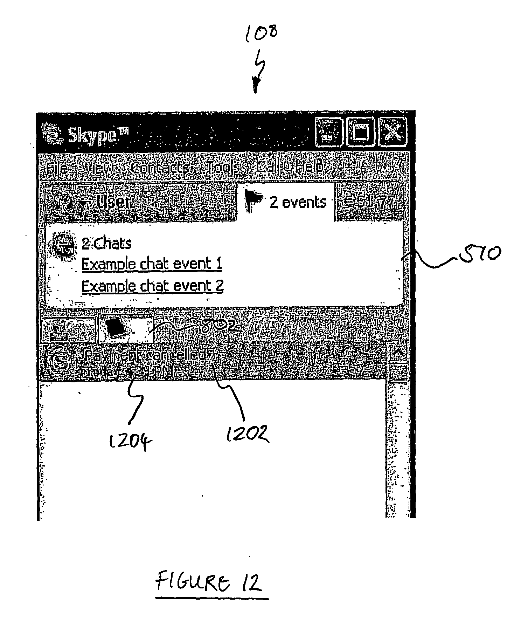

After the action button 1108 or cancel button 1110 has been activated, the message notification is removed from the event panel 510, as shown in Figure 12, and is now shown in the history tab 802. The title of the message 1202 is shown, along with a timestamp 1204 of its delivery time.

A further application of the messaging system is for the delivery of reminders of an event to a user. A specific example of this is a reminder for the user to join a Skypecast. A Skypecast is a large-scale VoIP voice conference that is hosted over the P2P network. More details on Skypecasts can be found in GB0608595.5. A user can browse a list of up-coming Skypecasts, and request to be reminded when a particular Skypecast is about to begin. At the start time of the Skypecast the P2P operator sends a message to the user using the message delivery system, and similar messages are displayed as described above with reference to Figures 4 to 12. The action button displayed in the main message window comprises a hyperlink containing the calling identifier for the Skypecast, and will cause the client to connect to the Skypecast in question, thereby starting a VoIP call with the other participants of the Skypecast.

The sending of reminders is particularly suited to this type of messaging system as the messages are sent very rapidly to the user. This is useful as the messages relate to an event (e.g. the beginning of a Skypecast) that is happening in real-time, and must therefore be acted upon within a certain timeframe. Furthermore, it is also advantageous that the messaging system can associate a lifespan with a message, after which it is discarded if the user is not online and has not received the message. This is useful for reminders if they relate to time-limited events, as there is no point delivering a reminder relating to an event that has already finished.

Another further application of the messaging system is for the delivery of information in response to a request from a user. A specific example of this is a telephone directory enquiry service. A user may wish to find out the telephone number of a company or organisation (e.g. the telephone number of a restaurant), and to do this he uses the client 108 to call a directory service using the VoIP P2P network. The user speaks to an operator and requests the number. In known systems, the operator would simply read the number to the user, and the user would need to write down the number separately, or alternatively the operator would redirect the call directly to the requested number. This has the disadvantages that the user must have means for writing the number down immediately to hand, or if the call is redirected the user does not have a record of the number for the next time he wishes to call it.

These disadvantages can be avoided by the operator of the directory service sending the information directly to the user in a message using the messaging system described above. The user is displayed similar messages as described above with reference to Figures 4 to 12. In particular, the text portion of the main message window (as in Figure 6 and 11) contains the telephone number requested by the user, and the action button causes the client 108 to call the telephone number in question directly (i.e. the action button has an embedded "callto:" hyperlink containing the telephone number), without the user needing to type in any information. As the message is stored in the history tab 802, the user can gain access to the information again at a later date. Alternatively, the action button in the message window can cause the telephone number requested to be added as a contact in the contact list 506 of the client 108. The messaging system described herein is also useful for supplying information in response to a request from a user as the messages are delivered very rapidly to the user, which is important as the user would expect an immediate response to their query.

Note that the information sent to the user from the directory service is not limited to a telephone number. The information can be a P2P network identity (in which case the action button can initiate a call to the P2P ID using VoIP or initiate an IM conversation), an email address (in which case the action button causes the execution of an email client with the address pre-entered in an email), a short message service ("SMS") number (in which case the action button opens a window in the client for the sending of an SMS), or any other type of contact information.

While this invention has been particularly shown and described with reference to preferred embodiments, it will be understood to those skilled in the art that various changes in form and detail may be made without departing from the scope of the invention as defined by the appendant claims.

## Claims

1. A method of transmitting a message from a first entity (118) to a terminal (106) of a user (104) over a communication system (110), comprising:
said first entity transmitting said message to a message transmission means (112);
said message transmission means generating a notification message from said message and storing said message in a storage means (128); and
transmitting said notification message to a client (108) executed on said terminal over said communication system; and
a second entity operating the communication system and authorising said first entity to access the message transmission means connected to said communication system, the method **characterised by**:
responsive to receiving said notification message, said client communicating with said storage means over the communication system to access information on said message to ascertain the identity of the first entity that transmitted the message, and determining whether the user has selected to receive messages from the first entity wherein said user selection is made prior to receiving the notification message; and
in the case that the user has selected to receive messages from the first entity, said client retrieving said message from said storage means over said communication system and displaying said message to said user on a display means of said terminal.

2. A method according to claim 1, further comprising the steps of:
said client displaying a list of entities to the user; and
said user selecting, for each entity in the list of entities, whether or not to receive messages from that entity.

3. A method according to claim 1 or 2, further comprising the step of, in the case that the user has selected not to receive messages from the first entity, said client rejecting the message without retrieving the message from the storage means.

4. A method according to any preceding claim, further comprising the step of said first entity accessing information relating to said user from said message transmission means prior to the step of transmitting said message.

5. A method according to claim 4, wherein said information relating to said user includes information on whether the user has selected to receive messages from the first entity, whereby if the user has selected not to receive messages from the first entity, said first entity does not transmit said message to said message transmission means.

6. A method according to claim 4 or 5, wherein said information relating to said user comprises the language of the user and/or the currency of the user.

7. A method according to any preceding claim, further comprising the step of said message transmission means transmitting a reporting message to said first entity responsive to said client retrieving the message.

8. A method according to claim 3, further comprising the step of said message transmission means transmitting a reporting message to said first entity responsive to said client rejecting the message.

9. A method according to any preceding claim, further comprising the step of said first entity defining a time limit for delivery of the message, and wherein said step of communicating with said storage means further comprises said client checking whether the time limit has expired, such that if the time limit has expired said client does not retrieve the message from the storage means.

10. A method according to claim 9, further comprising the step of said message transmission means transmitting a reporting message to said first entity responsive to the expiry of said time limit.

11. A method according to any preceding claim, wherein said communication system is a peer-to-peer communication system.

12. A method according to any preceding claim, wherein said message is one of a reminder message, a message from an auction website, an alert message from a payment service, or an information message from a directory enquiry service.

13. A system for transmitting a message from a first entity (118) to a terminal (106) of a user (104) over a communication system (110), wherein:
said first entity comprises means for transmitting said message to a message transmission means (112);
said message transmission means comprises means (126) for generating a notification message from said message, storage means (128) for storing said message, and means for transmitting said notification message to a client (108) executed on said terminal over said communication system, said client comprises means for displaying said message to said user on a display means of said terminal; and
the communication system is operated by a second entity, said second entity comprises means for authorising said first entity to access the message transmission means connected to said communication system, the system **characterised in that**:
said client comprises means for communicating with said storage means over the communication system to access information on said message to ascertain the identity of the first entity that transmitted the message, means for determining whether the user has selected to receive messages from the first entity wherein said user selection is made prior to receiving the notification message, means for retrieving said message from said storage means over said communication system in the case that the user has selected to receive messages from the first entity.

14. A system according to claim 13, wherein said client further comprises:
means for displaying a list of entities to the user; and
means for selecting, for each entity in the list of entities, whether or not to receive to receive messages from that entity.

15. A user terminal (106) connected to a communication system (110) and arranged to receive a message transmitted from a first entity (118) over the communication system, comprising:
a display means; and
a client (108) executed on said terminal, comprising means for receiving a notification message transmitted by a message transmission means connected to said communication system, said client comprises means for displaying said message to said user on the display means of said terminal, the user terminal **characterised in that**:
said client comprises means for communicating over the communication system with a storage means (128) storing said message to access information on said message to ascertain the identity of the first entity that transmitted the message, means for determining whether a user of the user terminal has selected to receive messages from the first entity wherein said user selection is made prior to receiving the notification message, means for retrieving said message from a storage means over said communication system in the case that the user has selected to receive messages from the first entity.

## Patentansprüche

1. Verfahren zum Übermitteln einer Nachricht von einer ersten Einheit (118) zu einem Endgerät (106) eines Benutzers (104) über ein Kommunikationssystem (110), aufweisend:
die erste Einheit überträgt die Nachricht zu einem Nachrichten-Übertragungsmitel (112);
das Nachrichten-Übertragungsmittel erzeugt eine Benachrichtigungs-Nachricht aus der Nachricht und speichert die Nachricht in einem Speichermittel (128); und
Übermitteln der Benachrichtigungs-Nachricht an einen Client (108) über das Kommunikationssystem, wobei der Client auf dem Endgerät ausgeführt wird; und
eine zweite Einheit betreibt des Kommunikationssystem und befugt die ersten Einheit, auf das Nachrichten-Übertragungsmittel zuzugreifen, das mit dem Kommunikationssystem verbunden ist, wobei das Verfahren **gekennzeichnet ist durch**:
in Reaktion auf das Empfangen der Benachrichtigungs-Nachricht, kommuniziert der Client mit dem Speichermittel über das Kommunikationssystem, um auf Information in der Nachricht zuzugreifen,
um die Identität der ersten Einheit festzustellen, die die Nachricht übermittelt hat, und stellt fest, ob der Benutzer ausgewählt hat, Nachrichten von der ersten Einheit zu empfangen, wobei die Benutzerauswahl vor dem Empfangen der Benachrichtigungs-Nachricht gemacht wird; und
im Falle, dass der Benutzer ausgewählt hat, Nachrichten von der ersten Einheit zu empfangen, fragt der Client die Nachricht von dem Speichermittel über das Kommunikationssystem ab und zeigt die Nachricht dem Benutzer auf einem Anzeigemitel des Endgerätes an.

2. Verfahren nach Anspruch 1, ferner aufweisend die folgenden Schritte:
der Client zeigt eine Liste von Einheiten dem Benutzer; und der Benutzer wählt für jede Einheit in der Liste von Einheiten aus, ob oder ob nicht Nachrichten von dieser Einheit empfangen werden sollen.

3. Verfahren nach Anspruch 1 oder 2, ferner aufweisend den Schritt, im Falle, dass der Benutzer ausgewählt hat, keine Nachrichten von der ersten Einheit zu empfangen, dass der Client die Nachricht ohne Abfragen der Nachricht von dem Speichermittel ablehnt.

4. Verfahren nach einem der vorhergehenden Ansprüche, ferner aufweisend den Schritt, dass die erste Einheit auf Information, die sich auf den Benutzer bezieht, von dem Nachrichten-Übertragungsmittel zugreift vor dem Schritt des Übermittelns der Nachricht.

5. Verfahren nach Anspruch 4, wobei die Information, die sich auf den Benutzer bezieht, Information darüber einschließt, ob der Benutzer ausgewählt hat, Nachrichten von der ersten Einheit zu erhalten, wonach, falls der Benutzer ausgewählt hat, keine Nachrichten von der ersten Einheit zu erhalten, die erste Einheit nicht die Nachricht an das Nachrichten-Übertragungsmittel übermittelt.

6. Verfahren nach Anspruch 4 oder 5, wobei die Information, die sich auf den Benutzer bezieht, die Sprache des Benutzers und/oder die Währung des Benutzers aufweist.

7. Verfahren nach einem der vorhergehenden Ansprüche, ferner aufweisend den Schritt, dass das Nachrichten-Übertragungsmittel eine Berichts-Nachricht an die erste Einheit in Reaktion auf den Client, der auf die Nachricht zugreift, übermittelt.

8. Verfahren nach Anspruch 3, ferner aufweisend den Schritt, dass das Nachrichten-Übertragungsmittel eine Berichts-Nachricht an die erste Einheit in Reaktion auf den Client, der die Nachricht verweigert, übermittelt.

9. Verfahren nach einem der vorhergehenden Ansprüche, ferner aufweisend den Schritt, dass die erste Einheit eine zeitliche Begrenzung für eine Zustellung der Nachricht festlegt, und wobei der Schritt des Kommunizierens mit dem Speichermittel ferner aufweist, dass der Client überprüft, ob die zeitliche Begrenzung abgelaufen ist, so dass, falls die zeitliche Begrenzung abgelaufen ist, der Client nicht auf die Nachricht von dem Speichermittel zugreift.

10. Verfahren nach Anspruch 9, ferner aufweisend den Schritt, dass das Nachrichten-Übertragungsmittel eine Berichts-Nachricht an die erste Einheit in Reaktion auf den Ablauf der zeitlichen Begrenzung übermittelt.

11. Verfahren nach einem der vorhergehenden Ansprüche, wobei das Kommunikationssystem ein Peer-to-Peer Kommunikationssystem ist.

12. Verfahren nach einem der vorhergehenden Ansprüche, wobei die Nachricht eine ist von einer Erinnerungs-Nachricht, einer Nachricht von einer Auktions-Webseite, einer Alarmierungs-Nachricht von einem Bezahl-Service oder eine Informations-Nachricht von einem Telefonauskunfts-Service.

13. System zum Übermitteln einer Nachricht von einer ersten Einheit (118) zu einem Endgerät (106) eines Benutzers (104) über ein Kommunikationssystem (110), wobei:
die erste Einheit Mittel zum Übermitteln der Nachricht zu einem Nachrichten-Übertragungsmittel (112) aufweist;
das Nachrichten-Übertragungsmittel Mittel (126) zum Erzeugen einer Benachrichtigungs-Nachricht aus der Nachricht aufweist, Speichermittel (128) zum Speichern der Nachricht und Mittel zum Übermitteln der Benachrichtigungs-Nachricht an einen Client (108) über das Kommunikationssystem, der auf dem Endgerät ausgeführt wird, wobei der Client Mittel zum Anzeigen der Nachricht dem Benutzer auf einem Anzeigemittel des Endgerätes aufweist; und
das Kommunikationssystem durch eine zweite Einheit betrieben ist, wobei die zweite Einheit Mittel aufweist zum Befugen der ersten Einheit, auf das Nachrichten-Übertragungsmittel zuzugreifen, das mit dem Kommunikationssystem verbunden ist, wobei das System **gekennzeichnet ist durch**:
der Client weist Mittel zum Kommunizieren mit dem Speichermittel über das Kommunikationssystem auf, um auf Information in der Nachricht zuzugreifen, um die Identität der ersten Einheit festzustellen, die die Nachricht übermitelt hat, Mittel zum Feststellen, ob der Benutzer ausgewählt hat, Nachrichten von der ersten Einheit zu empfangen, wobei die Benutzerauswahl vor dem Empfangen der Benachrichtigungs-Nachricht gemacht wird, Mittel zum Abfragen der Nachricht von dem Speichermittel über das Kommunikationssystem in dem Fall, dass der Benutzer ausgewählt hat, Nachrichten von der ersten Einheit zu empfangen.

14. System nach Anspruch 13, wobei der Client ferner aufweist:
Mittel zum Anzeigen einer Liste von Einheiten dem Benutzer; und
Mittel zum Auswählen, für jede Einheit in der Liste von Einheiten, ob oder ob nicht Nachrichten von dieser Einheit empfangen werden sollen.

15. Benutzer-Endgerät (106), das mit einem Kommunikationssystem (110) verbunden ist und das ausgebildet ist, um eine Nachricht zu empfangen, die von einer ersten Einheit (118) über das Kommunikationssystem übermittelt wird, aufweisend:
ein Anzeigemittel; und
einen Client (108), der auf dem Endgerät ausgeführt wird, aufweisend Mittel zum Empfangen einer Benachrichtigungs-Nachricht, die durch ein Nachrichten-Übertragungsmittel, das mit dem Kommunikationssystem verbunden ist, übermittelt wird, wobei der Client Mittel zum Anzeigen der Nachricht dem Benutzer auf dem Anzeigemittel des Endgerätes aufweist, wobei das Benutzer-Endgerät **gekennzeichnet ist durch**:
der Client weist Mittel zum Kommunizieren über das
Kommunikationssystem mit einem Speichermittel (128) auf, das die Nachricht speichert, um auf Information in der Nachricht zuzugreifen, um die Identität der ersten Einheit festzustellen, die die Nachricht übermittelt hat, Mittel zum Feststellen, ob ein Benutzer des Benutzer-Endgerätes ausgewählt hat, Nachrichten von der ersten Einheit zu empfangen, wobei die Benutzerauswahl vor dem Empfangen der Benachrichtigungs-Nachricht gemacht wird, Mittel zum Abfragen der Nachricht von einem Speichermittel über das Kommunikationssystem in dem Fall, dass der Benutzer ausgewählt hat, Nachrichten von der ersten Einheit zu empfangen.

## Revendications

1. Procédé pour transmettre un message à partir d'une première entité (118) vers un terminal (106) d'un utilisateur (104) par l'intermédiaire d'un système de communication (110), comprenant les étapes suivantes :
la première entité transmet le message à des moyens de transmission de messages (112) ;
les moyens de transmission de messages génèrent un message de notification à partir dudit message et mémorisent le message dans des moyens de mémorisation (128) ; et
transmission du message de notification à un client (108) exécuté sur le terminal par l'intermédiaire du système de communication ; et
une deuxième entité actionne le système de communication et autorise la première entité à accéder aux moyens de transmission de messages connectés au système de communication, le procédé étant **caractérisé par** les étapes suivantes :
en réponse à la réception du message de notification, le client communique avec les moyens de mémorisation par l'intermédiaire du système de communication pour accéder à des informations sur ledit message pour s'assurer de l'identité de la première entité que a émis le message, et détermine si l'utilisateur a sélectionné de recevoir des messages à partir de la première entité, la sélection de l'utilisateur étant effectuée avant la réception du message de notification ; et
dans le cas où l'utilisateur a sélectionné de recevoir des messages provenant de la première entité, le client récupère le message dans les moyens de mémorisation par l'intermédiaire du système de communication et affiche le message à l'utilisateur sur des moyens d'affichage du terminal.

2. Procédé selon la revendication 1, comprenant en outre les étapes suivantes :
le client affiche à l'utilisateur une liste d'entités ; et
l'utilisateur sélectionne, pour chaque entité se trouvant dans la liste d'entités, s'il faut recevoir ou pas des messages provenant de cette entité.

3. Procédé selon la revendication 1 ou 2, comprenant en outre une étape, dans le cas où l'utilisateur a sélectionné de ne pas recevoir de messages provenant de la première entité, par laquelle le client refuse le message sans récupérer le message dans les moyens de mémorisation.

4. Procédé selon l'une quelconque des revendications précédentes, comprenant en outre une étape dans laquelle la première entité accède à des informations concernant l'utilisateur à partir des moyens de transmission de messages avant l'étape de transmission dudit message.

5. Procédé selon la revendication 4, dans lequel les informations concernant l'utilisateur comprennent des informations indiquant si l'utilisateur a sélectionné de recevoir des messages provenant de la première entité, d'où il résulte que si l'utilisateur a sélectionné de ne pas recevoir de messages provenant de la première entité, la première entité ne transmet pas le message aux moyens de transmission.

6. Procédé selon la revendication 4 ou 5, dans lequel les informations concernant l'utilisateur comprennent la langue de l'utilisateur et/ou la devise de l'utilisateur.

7. Procédé selon l'une quelconque des revendications précédentes, comprenant en outre une étape dans laquelle les moyens de transmission de messages transmettent à la première entité un message de compte-rendu en réponse à la récupération du message par le client.

8. Procédé selon la revendication 3, comprenant en outre une étape dans laquelle les moyens de transmission de messages transmettent à la première entité un message de compte-rendu en réponse au refus du message par le client.

9. Procédé selon l'une quelconque des revendications précédentes, comprenant en outre une étape dans laquelle la première entité définit une limite temporelle pour la fourniture du message, et dans lequel l'étape de communication avec les moyens de mémorisation comprend en outre une vérification par le client si la limite temporelle a expiré, de sorte que si la limite temporelle a expiré le client ne récupère pas le message dans les moyens de mémorisation.

10. Procédé selon la revendication 9, comprenant en outre une étape dans laquelle les moyens de transmission de messages transmettent à la première entité un message de compte-rendu en réponse à l'expiration de la limite temporelle.

11. Procédé selon l'une quelconque des revendications précédentes, dans lequel le système de communication est un système de communication de poste à poste.

12. Procédé selon l'une quelconque des revendications précédentes, dans lequel le message est soit un message de rappel, soit un message provenant d'un site d'enchères sur la toile, soit un message d'alerte provenant d'un service de paiement, soit un message d'informations provenant d'un service d'interrogation de répertoire.

13. Système pour transmettre un message à partir d'une première entité (118) vers un terminal (106) d'un utilisateur (104) par l'intermédiaire d'un système de communication (110), dans lequel :
la première entité comprend des moyens pour transmettre le message à des moyens de transmission de messages (112) ;
les moyens de transmission de messages comprennent des moyens (126) pour générer un message de notification à partir du message, des moyens de mémorisation (128) pour mémoriser le message, et des moyens pour transmettre le message de notification à un client (108) exécuté sur le terminal par l'intermédiaire du système de communication, le client comprenant des moyens pour afficher le message à l'utilisateur sur des moyens d'affichage du terminal ; et
le système de communication est actionné par une deuxième entité, la deuxième entité comprenant des moyens pour autoriser la première entité à accéder aux moyens de transmission de messages connectés au système de communication, le système étant **caractérisé en ce que** :
le client comprend des moyens pour communiquer avec les moyens de mémorisation par l'intermédiaire du système de communication pour accéder à des informations sur le message pour s'assurer de l'identité de la première entité qui a transmis le message, des moyens pour déterminer si l'utilisateur a sélectionné de recevoir des messages à partir de la première entité, la sélection de l'utilisateur étant effectuée avant la réception du message de notification, des moyens pour récupérer le message dans les moyens de mémorisation par l'intermédiaire du système de communication dans le cas où l'utilisateur a sélectionné de recevoir des messages provenant de la première entité.

14. Système selon la revendication 13, dans lequel le client comprend en outre :
des moyens pour afficher à l'utilisateur une liste d'entités ; et
des moyens pour sélectionner, pour chaque entité se trouvant dans la liste d'eritités, s'il faut recevoir ou pas des messages provenant de cette entité.

15. Terminal d'utilisateur (106) connecté à un système de communication (110) et agencé pour recevoir un message transmis à partir d'une première entité (118) par l'intermédiaire du système de communication, comprenant :
des moyens d'affichage ; et
un client (108) exécuté sur le terminal, comprenant des moyens pour recevoir message de notification transmis par des moyens de transmission de messages connectés au système de communication, le client comprenant des moyens pour afficher le message à l'utilisateur sur les moyens d'affichage du terminal, le terminal d'utilisateur étant **caractérisé en ce que** :
le client comprend des moyens pour communiquer par l'intermédiaire du système de communication avec des moyens de mémorisation (128) mémorisant le message pour accéder à des informations sur le message pour s'assurer de l'identité de la première entité que a transmis le message, des moyens pour déterminer si un utilisateur du terminal d'utilisateur a sélectionné de recevoir des messages à partir de la première entité, la sélection de l'utilisateur étant effectuée avant la réception du message de notification, des moyens pour récupérer le message dans des moyens de mémorisation par l'intermédiaire du système de communication dans le cas où l'utilisateur a sélectionné de recevoir des messages provenant de la première entité.
